# EUROPEAN PATENT SPECIFICATION

(11) **EP 0 743 897 B1**
(45) Date of publication and mention of the grant of the patent: **29.07.1998**
(21) Application number: 95909673.6
(22) Date of filing: 03.02.1995
(51) Int. Cl.: B29C 65/14

(54) **METHOD OF JOINING ELONGATE HOLLOW MEMBERS**
VERFAHREN ZUM VERBINDEN VON LANGEN HOHLKÖRPERN
PROCEDE DE RACCORDEMENT D'ELEMENTS CREUX ALLONGES

(30) Priority: 08.02.1994 GB 9402394
(43) Date of publication of application: 27.11.1996
(73) Proprietor: UPONOR LIMITED, Blackwell, Nr. Alfreton, Derbyshire DE55 5JD (GB)
(72) Inventor: DICKINSON, Alan, John, Kirkby-in-Ashfield NG17 8NQ (GB)
(74) Representative: Hall, Robert Leonard
(86) International application number: EP9500407
(87) International publication number: WO9521737

(56) References cited:
- EP-A- 0 014 354
- EP-A- 0 102 919
- EP-A- 0 337 776
- EP-A- 0 415 068
- EP-A- 0 510 804
- EP-A- 0 562 706
- WO-A-93/10961
- DE-A- 1 479 239
- DE-A- 1 810 738
- DE-A- 2 136 656
- FR-A- 1 146 991
- FR-A- 1 551 911
- FR-A- 2 112 807
- GB-A- 1 582 078
- GB-A- 2 276 584
- US-A- 2 553 259
- US-A- 3 960 624
- US-A- 4 419 304
- PATENT ABSTRACTS OF JAPAN vol. 012 no. 297 (C-519) ,12 August 1988 & JP,A,63 063773 (NIPPON TELEGR & TELEPH CORP) 22 March 1988,
- PATENT ABSTRACTS OF JAPAN vol. 003 no. 037 (C-041) ,29 March 1979 & JP,A,54 010378 (DAIKIN IND LTD) 25 January 1979,

## Description

This invention relates to a method of joining elongate hollow members, and more particularly to a method of joining elongate hollow members formed from polymeric material by fusion.

Elongate hollow members, for example distribution pipes for utilities such as natural gas and water, are usually made from polymeric materials such as polyethylene. Long lengths of such pipes are laid in the ground and are typically joined by a variety of fusion methods, particularly butt fusion, socket fusion, or electrofusion.

In butt fusion the pipe ends are forced against a heated plate which raises them to fusion temperature. The plate is removed and the ends are forced together. The method involves upsetting the fused material which forms internal and external beads. In some circumstances to be described in more detail below, it is necessary to remove the external bead by a subsequent cutting operation.

In socket fusion the outer surfaces of the pipe ends and the inner surfaces of the socket are melted using a heating tool and the pipe ends are fitted into the socket to create fusion joints. The socket is usually of a larger diameter than the pipes and this can also give rise to difficulties in some situations.

In electrofusion, the pipe ends are fitted into a fusion coupler made of polyethylene and incorporating a electrical heating element. Passage of an electric current through the heating element causes the inner layer of the fusion coupler, and usually the outer layers of the end portions of the pipes, to fuse and bond. As with socket fusion, the coupler remains as an external projection at the joint region.

The above techniques are suitable in many instances, but difficulties have arisen in joining pipes and tubes intended for lining or re-lining distribution pipes. Examples of such pipes and tubes are described in European patent applications nos. 0065886 [Laurent], 0254489 (BP), 0298125 (Osaka Gas) and 0301697 [Pipeliners Inc], British Patent Applications Nos. 2084686 (British Steel), 2218490 (Nu-pipe), 2181208 (Trest), and in British Patent Applications Nos. 9322198.4 and 9322229.7. Such lining pipes and tubes are often dimensionally recoverable, usually heat recoverable, and the heat involved in fusion joining the pipes or tubes can often cause undesirable premature expansion. The presence of an external bead, socket or fusion coupler on the outer surface of the joint is a further disadvantage where the pipes and tubes are to be used for re-lining.

In PCT/GB19/01793 [British Gas] there is described a method of joining hollow members of synthetic plastics material which comprises assembling the members with a liner or synthetic plastic material internally bridging mutually opposed end portions of the members, heating said end portions and said liner to expand the liner into contact with said end portions and to join the two members together by a welded joint formed between the end faces of the members or by welded joints formed between the members and the liner or by a combination of such joints, said heating of the liner causing it to reach its crystalline melting point without flowing and retaining sufficient elasticity and stiffness to recover the diameter which it had prior to a deformation, to reduce the diameter, carried out at a lower temperature. The liner may incorporate material susceptible to heating by microwaves.

In European Patent Application No. 0562706 there is described a method of lining a pipeline comprising inserting into the pipeline a cross-linked polymeric liner pipe which has been reduced from its original diameter to a lesser diameter or to a shape of reduced maximum dimension and which has a predisposition by virtue of its memory to revert upon heating towards said original diameter, said lesser diameter being less than the least inner diameter of the pipeline, and heating the liner pipe to cause the liner pipe to revert towards said original diameter characterised in that said heating is caused by a source of visible or infra-red radiation. In one embodiment the liner pipe may be provided with an outer sheath of cross-linked polyethylene containing material, for example carbon black, to act as a heat sink and to re-radiate radiation inwardly back into the liner pipe.

In GB2255040, a welded joint is formed between a first member of polyolefinic material and a second member of cross-linked polyolefinic material, the members being arranged so that at least a part of an inner surface of one member encircles and is opposed to at least part of the outer surface of the other member, the second member being heat recoverable, and the surface of the second member remote from the opposed surfaces of the members is subjected to radiant energy, which can be visible or infra-red light, so that at least in the region of the opposed surfaces, the second member recovers towards the first member and forces itself into engagement with the opposed surface of the first member and so that the opposed surfaces reach a temperature at which a fusion bond occurs.

EPA0415068 describes a process in which plastic pipes are butt fused together within an infra-red absorptive tube formed from quartz glass. The pipes are supported internally by another tube or an inflation device.

In EPA0337776 there is described a method of forming a joint between two portions of plastic strap, each being formed of a radiant energy transmitting thermoplastic material, at least one of the strap portions being provided with a radiant energy absorbing area such that when the strap portions are overlapped the radiant energy absorbing area is at the interface therebetween. The overlapping strap portions are urged against each other and infra-red energy is directed through an outer surface of one of the strap portions onto the radiant energy absorbing area for melting a region of the strap portions at the engaged surfaces thereof to form a joint. There is no disclosure of a method for joining elongate hollow members.

WO-A-93/10961(Schneider) describes a process for assembling a balloon catheter involving the use of a laser to concentrate energy in a narrow bond site and thereby to melt polymeric materials along the bond site and form a fusion bond between elements of the catheter. As an alternative to relative rotation between the laser beam and the joint region, multiple beams of laser energy are directed at the joint site along circumferentially spaced optical fibres. The use of optical fibres in the system leads to a preference for laser energy at a wavelength in the near infra-red range. However, this wavelength is not well matched to the absorption spectra of the polymeric materials of the catheter assembly. Accordingly a coating of a dark ink or polymeric film is applied to one of the elements at the bond site, thus providing enhanced energy absorption.

JP-A-63063773(Nippon Telegraph and Telephone Corporation) discloses improvement of bond strengths at joints by interposing between the parts to be joined together a layer having an ability to absorb electromagnetic radiation such as microwave or light radiation.

EP-A-0510804(British Gas) discloses fusion bonding by infra-red heating.

We have now discovered an improved method of joining heat recoverable pipe lengths which can avoid the formation of an external weld bead, or the use of a socket or coupler. and which in a preferred aspect can be used to join lengths of heat recoverable pipe or tube without causing premature expansion at the joint region.

According to the invention, a method of joining together pipe lengths for use in lining or relining ducts for the distribution of liquid or gas, said pipe lengths being formed from a heat-recoverable polymeric material and being in a condition such that application of heat causes the diameter of the pipe lengths to increase, the pipe lengths having end portions of different diameters such that a first end portion of a first pipe length can fit within a second end portion of a second pipe length, the method including fusing adjacent surfaces of the first and second end portions to form a bond, characterised in that the polymeric material is infra-red transparent, a layer of infra-red absorptive material is interposed between the first and second end portions, and infra-red radiant energy is supplied to heat the infra-red absorptive layer to the fusion temperature of the polymeric material.

Heat recoverable elongate hollow members are well known and are described in detail in several of the patent specifications referred to previously. They can be produced from a variety of thermoplastic polymeric materials, which typically include polymers of vinyl monomers, more particularly polyolefins, such as for example polyethylene. The polymeric materials of the first and second elongate members can be the same or different. Cross-linked polymeric materials often have enhanced recoverability, and have the further advantage that when cross-linked to an appropriate degree they can soften and fuse but do not melt when heated to the crystalline melt temperature of the polymeric material. Cross-linked polyethylene is therefore the preferred polymeric material for use in the method of the present invention.

Polyethylene, whether cross-linked or un-cross linked, is substantially transparent to infra-red radiation which is a further reason for its preferred use. It will be appreciated, however, that other infra-red transparent polymeric materials including, for example, polymers and co-polymers of ethylene with other vinyl monomers can also be used in appropriate circumstances.

The presence of fillers in the infra-red transparent polymeric material, and especially fillers such as carbon black, can have a deleterious effect upon the infra-red transparency of the polymeric material, and thus fillers having a substantial infra-red absorbtion should be avoided. Similarly, other additives having an infra-red absorptive effect should also not be used.

The elongate hollow members to be joined have end portions of different diameter such that a first end portion of a first elongate hollow member can fit within a second end portion of a second elongate hollow member. The invention can be carried out either using elongate hollow members having different diameters, or by using elongate hollow members having substantially the same diameter and reducing the diameter of an end portion of the first hollow member such that it can fit within an end portion of the second hollow member. The diameter reduction can be achieved by heating the end portion and applying an axial force to draw down the diameter, or by passing the heated end portion through a reducing die or other suitable tool. It may be possible to carry out the diameter reduction without heating, but in this case heavier equipment needs to be used.

The length of the first end portion inserted into the second end portion can be chosen within quite wide limits, but usually a length of from 0.5 to 1.5 times the diameter of the second hollow member is preferred.

In the present invention, the heating of the outer surface of the first end portion of the first elongate hollow member and the inner surface of the second end portion of the second elongate hollow member is accomplished by applying infra-red radiant energy to an infra-red absorptive layer situated between them. The infra-red absorptive layer can be, for example, a separate component, that is it could be, for example, a tube of infra-red absorptive material of the appropriate diameter. Preferably, however, the infra-red absorptive layer comprises a layer of infra-red absorptive material carried on one or other of the elongate hollow members. Preferably the layer of infra-red absorptive material is carried on the outer surface of at least the first end portion of the first hollow member, although it could of course also be carried on the inner surface of the second end portion of the second hollow member. The layer of infra-red absorptive material preferably comprises a polymeric material containing an infra-red absorptive filler. The polymeric material may be cross-linked or un-cross-linked, but preferably the polymeric material is un-cross-linked, or the degree of cross-linking is relatively low in order that the polymeric material can fuse or flow at the fusion temperature of the first and second end portions of the elongate hollow members and assist in the bonding thereof.

In one embodiment, a layer of infra-red absorptive material may be painted, coated, or otherwise applied to the outer surface of the first end portion. In a particularly preferred embodiment according to the invention, however, the first elongate hollow member comprises a co-extruded pipe or tube having an inner layer of infra-red transparent polymeric material and an outer layer of infra-red absorptive material. The co-extrusion can, for example, be a two layer construction, an inner layer of infra-red transparent polymeric material and an outer layer of the same or a different polymeric material containing an infra-red absorptive filler. In a preferred embodiment, the co-extrusion can comprise an inner layer of polyethylene and an outer layer of polyethylene containing an infra-red absorptive filler.

The layer of infra-red absorptive material can be of any suitable thickness, but is preferably at least 0.2 millimetre thick, and most preferably has a thickness in the range of from 0.5 to 1.0 millimetre.

Although the infra-red absorptive layer could be entirely composed of an infra-red absorptive material, more usually it will comprise a layer of polymeric material containing an infra-red absorptive filler as mentioned above. Typical infra-red absorptive fillers include particularly carbon black, but other fillers such as titanium dioxide may also be effective. The filler can have any suitable particle size, but preferably has an average particle diameter of from 10 to 100 microns.

The infra-red radiant energy may be applied from a source which is positioned either internally or externally of the joint region. In the simplest embodiment, an infra-red heater is moved internally along the pipe or tube until it reaches the joint region and is then energised. Infra-red radiant energy passes through the infra-red transparent wall of the first end portion of the first elongate hollow member and is absorbed by the infra-red absorptive layer. The temperature of this layer rises to the fusion temperature of the polymeric materials of the hollow members and the layer, and the adjacent surfaces of the first end portion and the second end portion become fused and welded together. The infra-red radiant heater can then either be removed from the pipe or tube or passed along the pipe or tube to the next joint.

It will be appreciated that the method described involves only localised heating of a thin layer between the telescoped end portions, and thus the risk that the joint region will tend to recover prematurely is substantially minimised. It is, however, possible to apply an annular clamp around the joint region, in contact with the outer surface of the second end portion, in order to prevent expansion during the fusion stage.

For many purposes, it would be desirable to apply the infra-red radiant energy from a heater situated externally of the elongate hollow members and in this situation, various modifications of the method can be provided. Clearly if the radiant energy is to be applied externally, it is necessary to remove any infra-red absorptive material from the outer surface of the second elongate hollow member and this may be done by scraping or abrasion if, for example, the second elongate hollow member also comprises a co-extrusion of an inner layer of infra-red transparent polymeric material and an outer layer comprising an infra-red absorptive material. Additionally, any clamp which is used will need to be infra-red transparent. Finally, although not essential, it may be found preferable to provide an internal support ring at the joint region in order to ensure that the surfaces of the first and second end portions are pressed firmly against the infra-red absorptive layer.

In a still further embodiment, either the first or the second hollow member may comprise a coupler comprising a hollow member formed from a substantially infra-red transparent polymeric material. Where the coupler joins two further hollow members, preferably the coupler ends have internal diameters only slightly greater than the external diameters of the hollow members to be joined. In this embodiment, the end portions of the elongate hollow members to be joined are preferably both reduced in diameter, as previously described, sufficiently that they can be inserted into the coupler. If the elongate hollow members both comprise an outer layer of infra-red absorptive material, when the ends of the elongate hollow members are inserted into the coupler this material will be positioned adjacent the inner surface thereof, that is, the infra-red absorptive material will be interposed between the outer surfaces of the elongate hollow members and the inner surfaces of the coupler. Infra-red radiant energy can now be applied by an external source and passes through the coupler to heat up the infra-red absorptive layers within the coupler. Fusion takes place as before, welding the coupler to the outer surfaces of the elongate hollow members to form a joint. If the elongate hollow members are both recoverable, the coupler should also be formed from a recoverable polymeric material in order that the joint region can also expand, for example, when used as a liner for a distribution pipe.

Several embodiments of the invention will now be described with reference to and as illustrated in the accompanying Drawings in which:
Figure 1 shows in sectional side elevation a first joint formed using an internal infra-red heater according to the method of the invention;
Figure 2 shows in sectional side elevation a second joint formed using an external infra-red heater according to the method of the invention; and
Figure 3 shows in sectional side elevation a third joint formed using a coupler and an external infra-red heater according to the method of the invention.

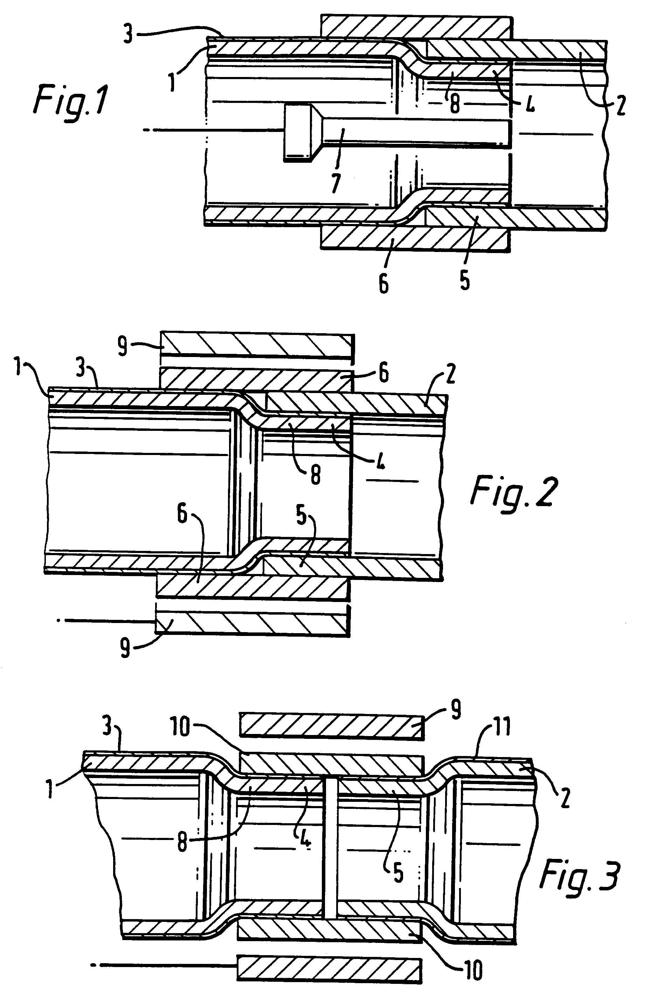

Referring firstly to figure 1, a pair of elongate tubular recoverable hollow members 1 and 2 are shown in position for fusion. The recoverable tubular member 1 has a thin external layer 3 comprising a carbon black filler which is a strong absorber of infra-red energy. The recoverable member 2 may be a similar co-extrusion, but in this case the outer infra-red absorptive layer would play no part in the fusion process.

Recoverable tubular member 1 has been previously subjected to a reduction of the diameter of its end region 4 by passing the end region through a reducing die at an elevated temperature, such that the end region 4 just fits within the end region 5 of recoverable tubular member 2. An annular clamp 6 may optionally be placed around the joint region in order to prevent any premature expansion during the fusion process.

An infra-red radiant heater 7 is pushed along the tubular member 1 until it reaches the joint region as shown. The heater 7 is then energised, and infra-red radiant energy from the heater passes through the inner wall 8 of the first end region 4 until it reaches the infra-red absorptive layer 3. This layer then becomes hot, eventually reaching the fusion temperature of the polymer materials of the tubular members 1, 2 and the layer 3. At this point the layers fuse together to form a secure fusion joint. After heating, the clamp 6 is removed and the heater 7 withdrawn.

Figure 2 shows a similar arrangement to that of Figure 1, and the same numerals are used for the same parts. In this case, however, the internal heater 7 is replaced by an annular external infra-red radiant heater 9. Fusion is carried out as previously described except that the infra-red radiant energy from the heater 9 passes through the infra-red transparent end region 5 of the tubular member 2 to reach the infra-absorptive layer 3. The clamp 6 if present, of course needs to be infra-red transparent, and any infra-red absorptive layer on the end region 5 of tubular member 2 must be removed, for example, by scraping or abrasion.

An internal support ring (not shown) may be positioned beneath the joint region when carrying out the method in according to this embodiment, but this is not usually essential.

A further embodiment of the invention is shown in Figure 3, using an infra-red transparent coupler 10. In this embodiment, both hollow tubular members 1, 2 are subjected to a diameter reduction at end regions 4, 5. Both also have co-extruded outer infra-red absorptive layers 3, 11. The reduced end regions 4, 5 are inserted into the coupler 10 which is made from a similar polymeric material to the material of the tubular members 4, 5. Annular infra-red heater 9 is again arranged about the joint region and energised. Infra-red radiant energy from the heater passes through the infra-red transparent polymeric material of the coupler 10 until it reaches the infra-red absorptive layers 3, 11. Fusion then takes place as previously described. The coupler 10 is preferably also recoverable so that when heated to the recovery temperature, the joint region will behave in the same way as the rest of elongate members 1, 2.

The invention provides a method of joining recoverable tubular members, especially those intended to be used for lining pipes which can avoid any outer protuberances at the joint region and which can provide a joint capable of heat recovery in a similar fashion to the remainder of the lengths of the joined tubular recoverable members.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiments. This invention extends to any novel one, or any novel combination, of the features disclosed in this specification (including any accompanying claims, abstract and drawings), or to any novel one, or any novel combination, of the steps of any method or process so disclosed.

## Claims

1. A method of joining together pipe lengths for use in lining or relining ducts for the distribution of liquid or gas, said pipe lengths being formed from a heat-recoverable polymeric material and being in a condition such that application of heat causes the diameter of the pipe lengths to increase, the pipe lengths having end portions of different diameters such that a first end portion of a first pipe length can fit within a second end portion of a second pipe length, the method including fusing adjacent surfaces of the first and second end portions to form a bond, characterised in that the polymeric material is infra-red transparent, a layer of infra-red absorptive material is interposed between the first and second end portions, and infra-red radiant energy is supplied to heat the infra-red absorptive layer to the fusion temperature of the polymeric material.

2. A method according to claim 1 in which the pipe lengths are formed from cross-linked polyethylene.

3. A method according to claim 1 or claim 2 in which the pipe lengths have substantially the same diameter except that the diameter of the first end portion of the first pipe length has been reduced such that it can fit within a second end portion of the second pipe length.

4. A method according to claim 3 in which the diameter reduction is achieved by passing the first end portion through a reducing dye.

5. A method according to any of the preceding claims in which the infra-red absorptive layer is carried on one or other of the elongate hollow members.

6. A method according to claim 5, in which at least the first pipe length comprises a co-extruded pipe or tube having an inner layer of infra-red transparent polymeric material and an outer layer of infra-red absorptive material.

7. A method according to any of the preceding claims, in which the infra-red absorptive layer comprises a layer of polymeric material containing an infra-red absorptive filler.

8. A method according to claim 7, in which the infra-red absorptive filler is carbon black.

9. A method according to claim 7 or 8, in which the infra-red absorptive layer comprises a polymeric material that is un-cross-linked, or has a degree of cross-linking such that it can fuse or flow at the fusion temperature of the surfaces of the first and second end portions.

10. A method according to any of the preceding claims, in which an infra-red heater is positioned internally of the joint region.

11. A method according to any of claims 1 to 9, in which an infra-red heater is positioned externally of the joint region.

12. A method according to any of the preceding claims, in which an annular clamp is positioned around the joint region to prevent expansion of the joint during the fusion stage.

13. A method according to any of the preceding claims, in which an internal support ring is provided at the joint region.

14. A method according to any of the preceding claims, in which the first or the second hollow member comprises a coupler comprising a hollow member formed from a substantially infra-red transparent polymeric material.

15. A method according claim 14, in which end portions of the hollow members to be joined are reduced in diameter sufficiently that they can be inserted into the coupler.

16. A method according to claim 14 or 15, in which the elongate hollow members are each provided, at least at an end region, with an outer layer of infra-red absorptive material such that when the end regions of the hollow members are inserted into the coupler, the infra-red absorptive material will be interposed between the outer surfaces of the hollow members and the inner surface of the coupler.

17. A method according to any of claims 14 to 16, in which the coupler comprises a recoverable polymeric material.

## Patentansprüche

1. Verfahren, um Rohrleitungsabschnitte miteinander zu verbinden, die zum Auskleiden oder Neuauskleiden von Röhren für das Verteilen von Flüssigkeiten oder Gasen verwendet werden, wobei die Rohrleitungsabschnitte aus einem durch Wärme rückbildbaren, polymeren Material hergestellt sind und sich in einen Zustand befinden, bei dem das Zuführen von Wärme eine Zunahme des Durchmessers der Röhrenabschnitte bewirkt, wobei die Rohrleitungsabschnitte Endbereiche mit unterschiedlichen Durchmessern haben, so daß ein erster Endbereich von einem ersten Rohrleitungsabschnitt in einen zweiten Endbereich von einem zweiten Rohrleitungsabschnitt eingesetzt werden kann, wobei das Verfahren das Schmelzen benachbarter Flächen der ersten und zweiten Endbereiche umfaßt, um eine Verbindung herzustellen, **dadurch gekennzeichnet**, daß das polymere Material infrarot-transparent ist, eine Schicht von infrarot-absorbierendem Material zwischen dem ersten und zweiten Endbereich angeordnet ist, und Infrarotstrahlungsenergie zugeführt wird, um die infrarot-absorbierende Schicht auf die Schmelztemperatur des polymeren Materials zu erhitzen.

2. Verfahren nach Anspruch 1, bei dem die Rohrleitungsabschnitte aus quervernetztem Polyethylen bestehen.

3. Verfahren nach Anspruch 1 oder Anspruch 2, bei dem die Rohrleitungsabschnitte im wesentlichen den gleichen Durchmesser haben, mit der Ausnahme, daß der Durchmesser des ersten Endbereiches des ersten Rohrleitungsabschnittes kleiner ist, so daß er in einen zweiten Endbereich des zweiten Rohrleitungsabschnittes eingesetzt werden kann.

4. Verfahren nach Anspruch 3, bei dem die Verminderung des Durchmessers erreicht wird, indem der erste Endbereich durch ein Reduziergesenk geführt wird.

5. Verfahren nach einem der vorhergehenden Abschnitte, bei dem die infrarot-absorbierende Schicht auf dem einen oder dem anderen der länglichen Hohlkörper aufgetragen ist.

6. Verfahren nach Anspruch 5, bei dem zumindest der erste Rohrleitungsabschnitt eine gemeinsam stranggepreßte Röhre bzw. Rohr enthält, das eine innere Schicht aus infrarot-transparentem, polymeren Material und eine äußere Schicht aus infrarot-absorbierendem Material hat.

7. Verfahren nach einem der vorhergehenden Ansprüche, bei dem die infrarot-absorbierende Schicht eine Schicht aus polymerem Material umfaßt, das einen infrarot-absorbierenden Füllstoff enthält.

8. Verfahren nach Anspruch 7, bei dem der infrarot-absorbierende Füllstoff Carbon-Black ist.

9. Verfahren nach Anspruch 7 oder 8, bei dem die infrarot-absorbierende Schicht ein polymeres Material enthält, das unvernetzt ist oder ein Ausmaß an Quervernetzung hat, so daß es bei der Schmelztemperatur der Flächen des ersten und zweiten Endbereiches schmelzen oder fließen kann.

10. Verfahren nach einem der vorhergehenden Ansprüche, bei dem innerhalb des Verbindungsbereiches eine Infrarot-Heizeinrichtung angeordnet wird.

11. Verfahren nach einem der Ansprüche 1 bis 9, bei dem außerhalb des Verbindungsbereiches eine Infrarot-Heizeinrichtung angeordnet wird.

12. Verfahren nach einem der vorhergehenden Ansprüche, bei dem um den Verbindungsbereich herum eine ringförmige Klemmeinrichtung angeordnet ist, um eine Ausdehnung der Verbindung während des Schmelzvorgangs zu verhindern.

13. Verfahren nach einem der vorhergehenden Ansprüche, bei dem am Verbindungsbereich ein innerer Haltering vorgesehen ist.

14. Verfahren nach einem der vorhergehenden Ansprüche, bei dem das erste oder das zweite Hohlbauteil eine Kupplung enthält, die ein Hohlbauteil umfaßt, das aus einem im wesentlichen infrarot-transparenten, polymeren Material besteht.

15. Verfahren nach Anspruch 14, bei dem Endabschnitte der miteinander zu verbindenden Hohlbauteile einen verminderten Durchmesser haben, der geeignet ist, daß sie in die Kupplung eingesetzt werden können.

16. Verfahren nach Anspruch 14 oder 15, bei dem jedes längliche Hohlbauteil zumindest an einem Endbereich mit einer äußeren Schicht aus infrarot-absorbierendem Material versehen ist, so daß sich das infrarot-absorbierende Material beim Einsetzen der Endbereiche der Hohlbauteile in die Kupplung zwischen den Außenflächen der Hohlbauteile und der Innenfläche der Kupplung befindet.

17. Verfahren nach einem der Ansprüche 14 bis 16, bei dem die Kupplung ein rückbildbares, polymeres Material enthält.

## Revendications

1. Procédé de raccordement de longueurs de tuyau pour une utilisation pour le garnissage ou le remplacement de garniture de canalisations pour la distribution de liquide ou de gaz, lesdites longueurs de tuyau étant formées à partir d'un matériau polymère à reprise de forme sous l'effet de la chaleur et étant dans un état tel que l'application de chaleur provoque l'augmentation du diamètre des longueurs de tuyau, les longueurs de tuyau ayant des parties d'extrémité de diamètres différents de manière à ce qu'une première partie d'extrémité d'une première longueur de tuyau puisse s'emboîter dans une deuxième partie d'extrémité d'une deuxième longueur de tuyau, le procédé comprenant la fusion de surfaces adjacentes des première et deuxième parties d'extrémité pour former une liaison, caractérisé en ce que le matériau polymère est transparent aux infrarouges, une couche de matériau absorbant les infrarouges est intercalée entre les première et deuxième parties d'extrémité, et de l'énergie de rayonnement infrarouge est fournie afin de chauffer la couche absorbant les infrarouges à la température de fusion du matériau polymère.

2. Procédé selon la revendication 1, dans lequel les longueurs de tuyau sont formées en polyéthylène réticulé.

3. Procédé selon la revendication 1 ou la revendication 2, dans lequel les longueurs de tuyau ont sensiblement le même diamètre sauf que le diamètre de la première partie d'extrémité de la première longueur de tuyau a été réduit de manière à ce qu'elle puisse s'emboîter dans une deuxième partie d'extrémité de la deuxième longueur de tuyau.

4. Procédé selon la revendication 3, dans lequel la réduction de diamètre est réalisée en faisant passer la première partie d'extrémité à travers une matrice réductrice.

5. Procédé selon l'une quelconque des revendications précédentes, dans lequel la couche absorbant les infrarouges est portée sur l'un ou l'autre des éléments creux allongés.

6. Procédé selon la revendication 5, dans lequel au moins la première longueur de tuyau comprend un tuyau ou tube co-extrudé ayant une couche intérieure de matériau polymère transparent aux infrarouges et une couche extérieure de matériau absorbant les infrarouges.

7. Procédé selon l'une quelconque des revendications précédentes, dans lequel la couche absorbant les infrarouges comprend une couche de matériau polymère contenant une charge absorbant les infrarouges.

8. Procédé selon la revendication 7, dans lequel la charge absorbant les infrarouges est le noir de carbone.

9. Procédé selon la revendication 7 ou 8, dans lequel la couche absorbant les infrarouges comprend un matériau polymère qui est non réticulé, ou a un degré de réticulation tel qu'il peut fondre ou s'écouler à la température de fusion des surfaces des première et deuxième parties d'extrémité.

10. Procédé selon l'une quelconque des revendications précédentes, dans lequel un dispositif chauffant à infrarouges est positionné à l'intérieur par rapport à la zone de joint.

11. Procédé selon l'une quelconque des revendications 1 à 9, dans lequel un dispositif chauffant à infrarouges est positionné à l'extérieur de la zone de joint.

12. Procédé selon l'une quelconque des revendications précédentes, dans lequel une pince annulaire est positionnée autour de la zone de joint pour éviter l'expansion du joint pendant l'étape de fusion.

13. Procédé selon l'une quelconque des revendications précédentes, dans lequel une bague de support interne est prévue au niveau de la zone de joint.

14. Procédé selon l'une quelconque des revendications précédentes, dans lequel le premier ou le deuxième élément creux comprend un dispositif d'accouplement comprenant un élément creux formé d'un matériau polymère sensiblement transparent aux infrarouges.

15. Procédé selon la revendication 14, dans lequel les parties d'extrémité des éléments creux à raccorder ont leur diamètre réduit suffisamment pour pouvoir être introduites dans le dispositif d'accouplement.

16. Procédé selon la revendication 14 ou 15, dans lequel les éléments creux allongés sont chacun pourvu, au moins au niveau d'une partie d'extrémité, d'une couche extérieure de matériau absorbant les infrarouges de manière que, lorsque les parties d'extrémité des éléments creux sont introduites dans le dispositif d'accouplement, le matériau absorbant les infrarouges soit intercalé entre les surfaces extérieures des éléments creux et la surface intérieure du dispositif d'accouplement.

17. Procédé selon l'une quelconque des revendications 14 à 16, dans lequel le dispositif d'accouplement comprend un matériau polymère à reprise de forme.
